# EUROPÄISCHE PATENTSCHRIFT

(11) **EP 1 344 695 B1**
(45) Veröffentlichungstag und Bekanntmachung des Hinweises auf die Patenterteilung: **28.05.2008**
(21) Anmeldenummer: 03013673.3
(22) Anmeldetag: 05.08.1997
(51) Int. Cl.: B60R 21/207

(54) **Anordnung eines Seiten-Airbag-Moduls an einem Kraftfahrzeugsitz**
Side air bag assembly in a motor vehicle
Montage de sac à air latéral dans un véhicule à moteur

(30) Priorität: 13.08.1996 DE 19632586
(43) Veröffentlichungstag der Anmeldung: 17.09.2003
(62) Teilanmeldung aus: 97113451.5
(73) Patentinhaber: ADAM OPEL AG, 65423 Rüsselsheim (DE)
(72) Erfinder: Leuchtmann, Andrew, Dipl.-Ing., 55595 Mandel (DE); Polster, Michael, Dipl.-Ing., 65462 Ginsheim (DE)

(56) Entgegenhaltungen:
- DE-U- 29 510 608
- PATENT ABSTRACTS OF JAPAN Bd. 016, Nr. 235 (M-1257), 29. Mai 1992 (1992-05-29) & JP 04 050052 A (MAZDA MOTOR CORP), 19. Februar 1992 (1992-02-19)
- PATENT ABSTRACTS OF JAPAN Bd. 1995, Nr. 03, 28. April 1995 (1995-04-28) & JP 06 344850 A (HONDA MOTOR CO LTD), 20. Dezember 1994 (1994-12-20)

## Beschreibung

Die Erfindung betrifft eine Anordnung eines Seiten-Airbag-Moduls an einem Kraftfahrzeugsitz gemäß dem Oberbegriff des Patentanspruches 1.

Mit DE 29 510 608 U1 ist eine Seiten-Airbag-Anordnung beschrieben, bei der ein die Rückenlehnenseite bildendes starres Abdeckteil den in der Rückenlehne befindlichen Luftsack abdeckt und gleichzeitig einen Schusskanal zur Entfaltung des Luftsackes bildet.

Bei einer solchen Airbag-Anordnung wird eine sichere Entfaltung des Luftsackes auch unter erschwerten Bedingungen gesichert. Zum Einbau eines solchen Seiten-Airbags in die Lehne ist jedoch eine relativ aufwendige Befestigung des Abdeckteiles am Sitz und an dem Airbag-Modul erforderlich. Insbesondere der Abschluss des Abdeckteiles an benachbarten, durch Polsterstoff bezogene Partien erfordert viel Sorgfalt, um ein ansprechendes Aussehen zu erreichen.

Es ist zwar gemäß DE 40 18 470 auch bekannt, einen in der Sitzlehne untergebrachten Seiten-Airbag durch den Sitzbezugsstoff gänzlich abzudecken, so dass ein dekoratives Abdeckteil nicht erforderlich ist. Jedoch ist dabei von Nachteil, dass das Airbag-Modul vor den Sitzbezugsarbeiter in der Sitz eingebaut werden muss, wobei infolge des an Airbag befindlichen, mit Explosivstoff versehenen Gasgenerators mit besonderer Behutsamkeit vorgegangen werden muss. Nachteilig ist auch, dass bei dieser Ausführung der Seiten-Airbag für den Fahrzeugnutzer nicht sichtbar ist, so dass funktionsbeeinträchtigenden Manipulationen am Sitz nur schwer entgegengewirkt werden kann.

Aus der JP 04 050052 A ist eine Anordnung eines Seiten-Airbag-Moduls an einem Kraftfahrzeugsitz nach dem Oberbegriff des Anspruchs 1 bekannt, wobei das Seiten-Airbag-Modul in einem größeren Hohlraum des Kraftfahrzeugsitz angeordnet ist, dessen Öffnung nach außen durch einen separaten Deckel verschlossen wird. Die JP 06 344850 A betrifft ein Beifahrerairbagmodul, welches in einem Hohlraum einer Instrumententafel aufgenommen ist, der durch einen Deckel verschlossen wird.

Es ist Aufgabe der Erfindung, eine Anordnung für ein Seiten-Airbag-Modul an einem gepolsterten und mit einem Sitzbezug versehenen Kraftfahrzeug zu schaffen, die ein problemloses Zusammenbauen des Sitzes ermöglicht, mit der saubere Übergänge zwischen Sitzbezug und Airbag-Modul erzielbar sind und bei der ein Airbag-Modul für die Fahrzeugnutzer deutlich erkennbar ist, so dass Hinweise auf unerlaubte Manipulationen am Sitz besser akzeptiert werden.

Erfindungsgemäß wird diese Aufgabe durch die Merkmale des ersten Patentanspruches gelöst.

Durch eine derartige Anordnung eines im Seitenbereich der Sitzlehne befindlichen Seiten-Airbag-Moduls werden die mit der erfindungsgemäßen Aufgabe angestrebten Vorteile erzielt.

Besonders vorteilhafte Ausführungsformen sind mit den Unteransprüchen dargestellt.

So werden durch die Ausführung des Kragens als elastische und mit Vorspannung auf der Sitzkontur und dem diese überspannenden Sitzbezug aufliegende Lippe die in einer Serienfertigung unvermeidlich auftretenden Toleranzen so ausgeglichen, dass ein sauberer Übergang erzielt wird.

Eine besonders gute und faltenfreie Halterung des Randes des Sitzbezuges an der Kontur des Seiten-Airbag-Moduls gelingt auch bei schwierig handhabbaren Bezugsstoffen, wenn der Sitzbezug zwischen dem Kragen und einem auf diesen aufgesetzten Rahmen gehalten ist. Dabei kann der Rahmen vorteilhaft durch clips- bzw. dornartige Haltehaken mit dem Kragen verbunden sein, so dass der Montageaufwand gering bleibt.

Eine weitere qualitative Absicherung der Montage, z. B. bei Verwendung von elastischen Stoffen für den Sitzbezug, kann erzielt werden durch eine Verstärkung des Randes des Sitzbezuges an der Öffnung für das Seiten-Airbag-Modul.

Ausführungsbeispiele der Erfindung sind nachstehend anhand von Zeichnungen näher beschrieben. Es zeigen
- Fig. 1:: das Skelett einer Sitzlehne eines Kraftfahrzeugsitzes;
- Fig. 2:: das Skelett nach Figur 1 in Verbindung mit einem vorgefertigten Polsterteil für die Sitzlehne;
- Fig. 3:: die aus dem Skelett und dem Polsterteil nach Figur 2 vormontierte und für den Einbau eines Seiten-Airbag-Moduls vorbereitete Sitzlehne;
- Fig. 4:: ein Seiten-Airbag-Modul;
- Fig. 5:: ein Seiten-Airbag-Modul im Schnitt entlang der Linie A-A nach Figur 4, verbunden mit einer Sitzlehne gemäß Figur 3;
- Fig. 6:: ein Seiten-Airbag-Modul im Schnitt entlang der Linie B-B nach Figur 4, verbunden mit einer Sitzlehne gemäß Figur 3;
- Fig. 7:: das Skelett einer weiteren Sitzlehne, vormontiert mit einem Seiten-Airbag-Modul;
- Fig. 8:: das Skelett nach Figur 7 in Verbindung mit einem vorgefertigten Polsterteil für die Sitzlehne;
- Fig. 9:: die aus dem Skelett und dem Polsterteil nach Figur 8 vormontierte Sitzlehne mit einem den Rand des Sitzbezuges fixierenden Rahmen;
- Fig. 10:: ein Seiten-Airbag-Modul im Schnitt entlang der Linie B-B nach Figur 4, verbunden mit einer Sitzlehne gemäß Figur 9;
- Fig. 11:: eine vergrößerte Darstellung der Randverbindung zwischen dem Seiten-Airbag-Modul und dem Sitzbezug bei einer Sitzlehne gemäß Figur 9;
- Fig. 12:: eine Einzelheit einer Randverbindung zwischen dem Seiten-Airbag-Modul und dem Sitzbezug gemäß Figur 9 mit einer Verstärkung des Randes des Sitzbezuges;
- Fig. 13 bis Fig. 15:: Ausführungsbeispiele für Randverstärkungen.

Ein Skelett 1 einer Sitzlehne eines Kraftfahrzeugsitzes ist an einer seiner Seitenteile 2 mit einer Aufnahmeöffnung 3 versehen, in welche ein Seiten-Airbag-Modul 4 einsetzbar und befestigbar ist. Das Skelett 1 trägt ein Polsterteil 5, das mit einem den Sitzbezug 6 bildenden Bezugsstoff umgeben ist. Der Sitzbezug 6 ist mit einer Öffnung 7 versehen, die bei an das Skelett 1 angebautem Polsterteil 5 deckungsgleich über der Aufnahmeöffnung 3 liegt. Das Seiten-Airbag-Modul 4 hat eine äußere Kontur, der die Aufnahmeöffnung 3 und die Öffnung 7 im Sitzbezug 6 entspricht. Über diese Kontur hinausragend hat das Seiten-Airbag-Modul 4 an der Schnittlinie mit der Sitzoberfläche einen umlaufenden, auf der Sitzkontur aufliegenden flachen Kragen 8; 28.

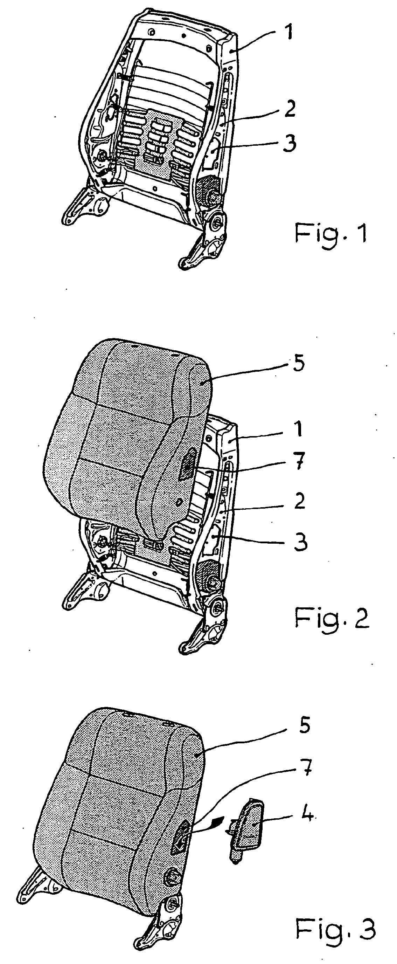

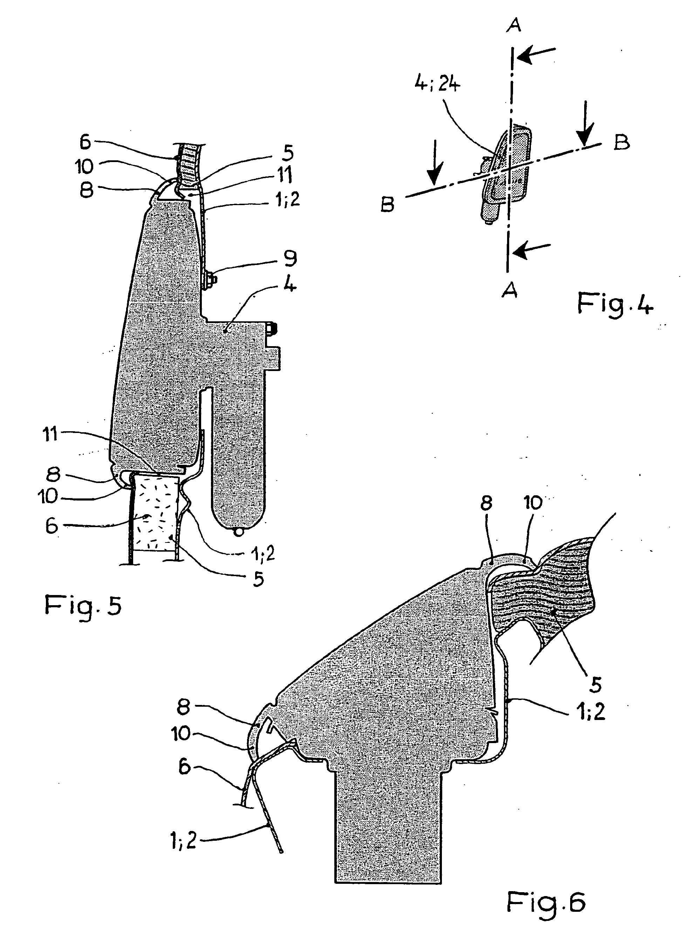

In einem ersten Ausführungsbeispiel, dargestellt in den Figuren 1 bis 6, wird zuerst das Skelett 1 und das Polsterteil 5 zusammengebaut. Danach wird durch die Öffnung 7 im Sitzbezug 6 das Seiten-Airbag-Modul 4 in die Aufnahmeöffnung am Skelett 1 eingesetzt und mit Schrauben 9 befestigt. Der Kragen 8 bildet hier eine elastische und mit Vorspannung auf dem Sitzbezug 6 des Polsterteiles 5 aufliegende Lippe 10 (Figur 5 und Figur 6), die einen Spalt 11 zwischen dem Polsterteil 5 und dem Seiten-Airbag-Modul 4 abdeckt und den Sitzbezug 6 an den Rändern der Öffnung 7 fixiert.

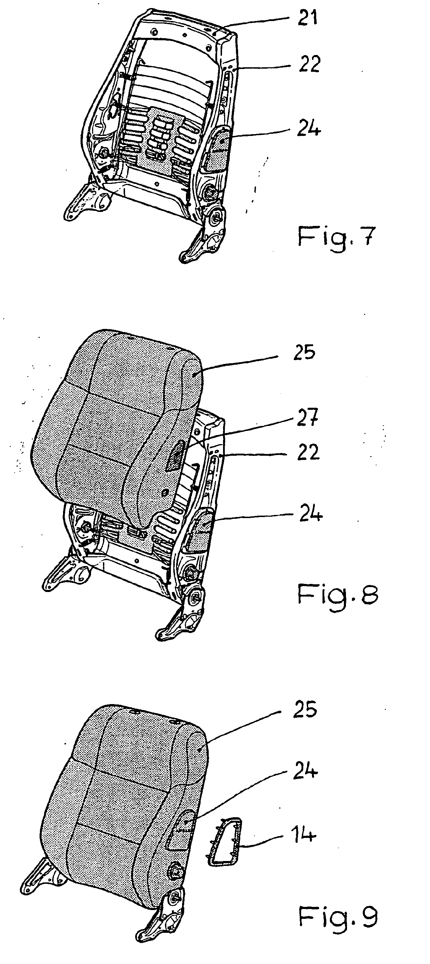

Ein weiteres Ausführungsbeispiel veranschaulichen die Figuren 7 bis 12.

Ein Skelett 21 einer Sitzlehne eines Kraftfahrzeugsitzes ist an seinem Seitenteil 22 mit einem in einer Aufnahmeöffnung eingesetzten Seiten-Airbag-Modul 24 fest verbunden. Das Skelett 21 trägt ein Polsterteil 25, das mit einem den Sitzbezug 26 bildenden Bezugsstoff umgeben ist. Der Sitzbezug 26 ist mit einer Öffnung 27 versehen, die bei Einbaulage des Polsterteils 25 über dem am Seitenteil 22 befestigten Seiten-Airbag-Modul 24 liegt.

Ein umlaufender Kragen 28 des Seiten-Airbag-Moduls 24 liegt dabei teilweise auf dem Seitenteil 22 an, teilweise begrenzt er den Raum für das Polsterteil 25. Der Rand 12 der Öffnung 27 des Sitzbezuges 26 liegt auf dem Kragen 28 außen auf. Der Kragen 28 ist über seinen Umfang verteilt mit Öffnungen 13 versehen. Ein der Form des Kragens 28 angepasster Rahmen 14 überdeckt den Rand 12 der Öffnung 27. Am Rahmen 14 befinden sich dornartige Haltehaken 15, die in gleicher Weise über den Umfang verteilt sind wie die Öffnungen 13 am Kragen 28. Die Haltehaken 15 des Rahmens 14 durchdringen die Öffnungen 13 des Kragens 28 und greifen formschlüssig hinter den Kragen 28.

Der Rahmen 14 ist ringsum mit einem elastischen Bund 16 versehen, der sich bei eingerasteten Haltehaken 15 unter Vorspannung auf den Rand 12 der Öffnung 27 des Sitzbezuges 26 auflegt und diesen gegen den Kragen 28 presst.

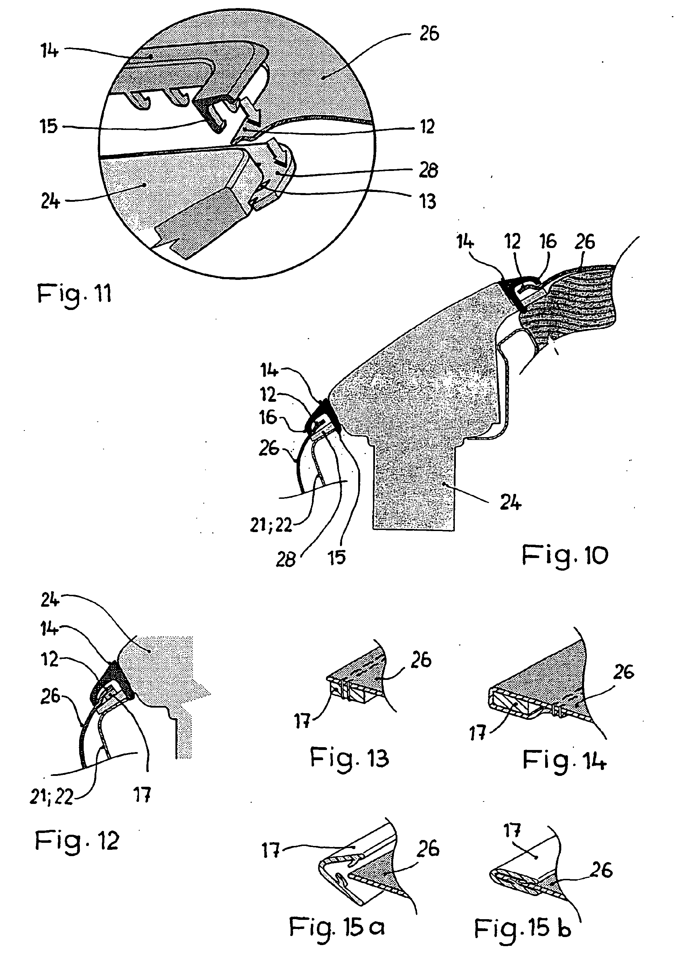

Der Rand 12 kann, wie Figur 12 zeigt, auch mit einer Verstärkung 17 versehen sein, so dass der Rand 12 gegenüber dem Kragen 28 und dem Rahmen 14 auch formschlüssig gehalten ist.

Die Figuren 13 bis 15 zeigen verschiedene mögliche Formen von Randverstärkungen 17. So ist bei Figur 13 die Verstärkung 17 mit einer Doppelnaht 18 befestigt. Bei Figur 14 ist die Verstärkung 17 in einen Saum eingenäht. Figur 15 zeigt eine Verstärkung 17, die aus einem plastisch verformbaren Streifen 19 besteht, der über die Kante des Randes 12 gepresst ist und mit Krallen am Stoff festhält. Figur 15a zeigt den Streifen 19 in unverformtem Zustand und Figur 15b in verformtem Zustand in Verbindung mit dem Rand 12.

## Patentansprüche

1. Anordnung eines Seiten-Airbag-Moduls (4; 24) an einem mit einem Polsterteil (5; 25) und einem Sitzbezug (6; 26) versehenen Kraftfahrzeugsitz, wobei im Seitenbereich der Sitzlehne eine Öffnung (7; 27) vorgesehen ist, durch die das Seiten-Airbag-Modul im Sitz versenkt und an dessen Sitzrahmen (1; 21) befestigt ist, **dadurch gekennzeichnet, dass** die Öffnung (7; 27) im Seitenbereich der Sitzlehne der Kontur des Seiten-Airbag-Moduls (4; 24) entsprechend vorgesehen ist, dass durch die Öffnung (7; 27) das Seiten-Airbag-Modul bündig zwischen Sitzoberfläche und Airbag-Abdeckung im Sitz versenkt ist, und dass das Seiten-Airbag-Modul (4; 24) in der Schnittlinie mit der Sitzoberfläche einen umlaufenden, auf der Sitzkontur aufliegenden, flachen Kragen (8; 28) aufweist, der einen Spalt (11) zwischen dem Polsterteil (5; 25) und dem Seiten-Airbag-Modul (4; 24) überdeckt.

2. Anordnung nach Anspruch 1, **dadurch gekennzeichnet, dass** der Kragen (8) als elastische, mit Vorspannung auf der Sitzkontur und dem ihn überspannenden Sitzbezug (6) aufliegende Lippe (10) ausgebildet ist.

3. Anordnung nach Anspruch 1, **dadurch gekennzeichnet, dass** der Rand (12) des Sitzbezuges (26) an der Öffnung (27) außen auf dem Kragen (28) aufliegt und ein dem Kragen (28) adäquater umlaufender Rahmen (14) über den Rand (12) des Sitzbezuges (26) auf dem Kragen (28) befestigt ist und den Rand (12) des Sitzbezuges (26) am Kragen (28) fixiert.

4. Anordnung nach Anspruch 3, **dadurch gekennzeichnet, dass** der Rahmen (14) mit über seinen Umfang verteilte mit in Richtung zum Kragen (28) gerichteten Haltehaken (15) und der Kragen (28) mit gleichermaßen verteilt angeordneten Öffnungen (13) zur Aufnahme der Haltehaken (15) versehen ist, wobei die Haltehaken (15) in die Öffnungen (13) eingreifen und in diesen formschlüssig gehalten sind.

5. Anordnung nach einem oder mehreren der Ansprüche 1 bis 4, **dadurch gekennzeichnet, dass** der Rand (12) des Sitzbezuges (26) an der Öffnung (27) verstärkt ist.

## Claims

1. Arrangement of a side airbag module (4; 24) on a motor vehicle seat, which is provided with an upholstery part (5; 25) and a seat cover (6; 26), wherein in the side region of the backrest an opening (7; 27) is provided, by means of which the side airbag module is embedded in the seat and fastened to the seat frame (1; 21) thereof, **characterized in that** the opening (7; 27) in the side region of the backrest is provided so as to correspond to the contour of the side airbag module (4; 24), that by means of the opening (7; 27) the side airbag module is embedded flush between seat upper surface and airbag cover in the seat, and that the side airbag module (4; 24) has in the line of intersection with the seat surface a peripheral, flat collar (8; 28), which rests on the seat contour and covers over a gap (11) between the upholstery part (5; 25) and the side airbag module (4; 24).

2. Arrangement according to claim 1, **characterized in that** the collar (8) takes the form of a flexible lip (10), which rests with prestress on the seat contour and the seat cover (6) that covers the collar.

3. Arrangement according to claim 1, **characterized in that** the edge (12) of the seat cover (26) at the opening (27) rests on the outside of the collar (28) and a peripheral frame (14), which is appropriate for the collar (28), is fastened over the edge (12) of the seat cover (26) on the collar (28) and fixes the edge (12) of the seat cover (26) on the collar (28).

4. Arrangement according to claim 3, **characterized in that** the frame (14) is provided with retaining hooks (15), which are distributed over the periphery of the frame (14) and oriented in the direction of the collar (28), and the collar (28) is provided with a similarly distributed arrangement of openings (13) for receiving the retaining hooks (15), wherein the retaining hooks (15) engage into the openings (13) and are held positively therein.

5. Arrangement according to one or more of claims 1 to 4, **characterized in that** the edge (12) of the seat cover (26) is reinforced at the opening (27).

## Revendications

1. Montage d'un module de sac gonflable de sécurité latéral (4; 24) sur un siège de véhicule automobile, muni d'une partie de rembourrage (5; 25) et d'un revêtement de siège (6; 26), dans la zone latérale du dossier étant prévue une ouverture (7; 27) à travers laquelle le module de sac gonflable de sécurité latéral est noyé dans le siège et fixé à son châssis de siège (1; 21), **caractérisé en ce que** l'ouverture (7; 27) est prévue dans la zone latérale du dossier, de manière correspondante au contour du module de sac gonflable de sécurité latéral (4; 24), **en ce que** le module de sac gonflable de sécurité est noyé dans le siège à travers l'ouverture (7; 27) en affleurement entre la surface de siège et le couvercle de sac gonflable de sécurité, et **en ce que** le module de sac gonflable de sécurité latéral (4; 24) présente, dans la ligne d'intersection avec la surface de siège, une collerette plate de pourtour (8; 28) reposant sur le contour de siège, et couvrant un intervalle (11) entre la partie de rembourrage (5; 25) et le module de sac gonflable de sécurité latéral (4; 24).

2. Montage selon la revendication 1, **caractérisé en ce que** la collerette (8) est réalisée sous la forme de lèvre (10) élastique, reposant en précontrainte sur le contour de siège et sur le revêtement de siège (6) le recouvrant.

3. Montage selon la revendication 1, **caractérisé en ce que** le bord (12) du revêtement de siège (26) à l'ouverture (27) repose extérieurement sur la collerette (28) et un cadre (14), entourant de façon adéquate la collerette (28), est fixé sur le bord (12) du revêtement de siège (26) sur la collerette (28) et fixe le bord (12) du revêtement de siège (26) sur la collerette (28).

4. Montage selon la revendication 3, **caractérisé en ce que** le cadre (14) est muni de crochets de maintien (15) répartis sur la périphérie, orientés en direction de la collerette (28) et la collerette (28) est munie d'ouvertures (13), réparties regulièrement, pour recevoir les crochets de maintien (15), qui s'engagent dans les ouvertures (13) et sont maintenus dans celles-ci par une liaison à ajustement de formes.

5. Montage selon l'une ou plusieurs des revendications 1 à 4, **caractérisé en ce que** le bord (12) du revêtement de siège (26) est renforcé sur l'ouverture (27).
